# EUROPEAN PATENT SPECIFICATION

(11) **EP 2 759 779 B1**
(45) Date of publication and mention of the grant of the patent: **03.07.2019**
(21) Application number: 14151814.2
(22) Date of filing: 20.01.2014
(51) Int. Cl.: F24F 13/02, F16L 17/025, F16L 21/02, F16L 47/10, F02M 35/10

(54) **Ventilation duct coupling and method of manufacturing thereof**
Lüftungskanalkupplung und Herstellungsverfahren dafür
Raccord de conduit de ventilation et méthode de production de ladite

(30) Priority: 28.01.2013 GB 201301481
(43) Date of publication of application: 30.07.2014
(73) Proprietor: Verplas Limited, Blackhill, Verwood, Dorset BH31 6HA (GB)
(72) Inventor: Armstrong, Kenneth, Verwood, Dorset BH31 6HA (GB)
(74) Representative: Grey, Ian Michael

(56) References cited:
- EP-A1- 1 840 436
- GB-A- 2 180 902
- GB-A- 2 381 050
- KR-B1- 100 877 141

## Description

The present invention relates to a coupling for joining lengths of ventilation ducting or ventilation ductwork components or accessories together.

A ventilation ductwork system is used to circulate warm or cold air within a building. The effective ventilation of dwellings and commercial offices is an essential requirement. It is known to construct ventilation systems using rigid plastic ducting and plastic accessories, which are of a modular nature and are designed to be push-fitted together so that multiple layouts are possible to meet almost any installation configuration.

As ventilation systems become more complex, ductwork complexity increases and longer lengths of duct and many more joints between connecting accessories and ductwork elements, such as elbow bends, tee pieces, system adaptors, are required.

Moreover, all new installations have to be performance tested on completion and must achieve pre-determined airflows at extract and supply points to meet any applicable standards or Building Regulations. This means that air leakage at the joints has become a major concern because leakage will adversely affect the air flow performance and balance of the system. If the installed performance does not achieve the minimum design performance, expensive remedial work may be required.

Traditionally, significant air leakage at the joints has been accepted in the industry, but as the required standards of performance increase, the industry is resorting to elementary methods of reducing leakage such as permanently sealing the joints with adhesive, using silicon sealant or other sealants to fill the joints and/or wrapping pvc or aluminium adhesive tape around the joint seams.

These elementary solutions are undesirable, because they are messy to execute when installing the ductwork or applying retrospectively to reduce leakage and can be expensive in terms of installation time. In addition, they are not readily reversible if a joint has to be broken and re-made for maintenance or alteration.

The present invention seeks to provide a coupling that overcomes or substantially alleviates the problems with conventional techniques for coupling ductwork components and accessories to each other and seeks to provide a joint with minimal air leakage.

It is known from GB2180902 to provide a push-fit coupling for interconnecting ends of first and second ventilation ductwork elements together so that air flowing between said ventilation ductwork elements will pass through the coupling in a substantially airtight manner, the coupling comprising an outer wall defining first and second sockets at opposite ends, each socket being sized to slideably receive and support a respective end of a first and a second ductwork element therein, wherein each socket includes a sealing member against said outer wall configured to resiliently deform and engage an end of a respective first and second ductwork element pushed into a socket to form a substantially airtight seal between the coupling and each ductwork element. GB 2180902 thereby discloses the features of the preamble of claim 1.

According to a first aspect of the invention there is provided a push-fit coupling as defined in claim 1. Such a coupling is characterised in that each sealing member is integrally formed and comprises primary and secondary sealing portions, the primary sealing portion comprising a flap that is resiliently deformed or bent by the ductwork element during insertion of a ductwork element in the socket beyond said secondary sealing portion so that the flap is biased into engagement with the ductwork element to form a primary seal between the socket and the ductwork element, the secondary sealing portion comprising a domed or triangular shaped element that forms a secondary seal between the socket and the ductwork element and guides a ductwork element into the socket and towards the primary sealing portion during insertion, the socket further comprising an inner wall that is spaced from and faces the sealing member to define a slot between the inner and outer walls to receive a ductwork element therein and which guides and re-shapes the end of a ductwork element during insertion so that it properly seals against the sealing element.

In preferred embodiments, the socket comprises a seat to receive said sealing member and the coupling further comprises a retaining ring to locate the sealing member in said seat.

Preferably, the retaining ring may contact the sealing member and is formed from a resilient material that forms a snap-fit over an end of the socket.

The retaining ring may be removable to enable a sealing member to be removed and replaced.

The ductwork element may be a friction fit in the slot and so the outer wall provides additional support for the ductwork element and/or helps maintain the coupling and the ductwork element in engagement.

In some embodiments, the free end of the inner wall may have a chamfered edge to guide a ductwork element into the slot during insertion.

According to a second aspect of the invention, there is provided a ventilation ductwork system comprising a plurality of ventilation ductwork elements coupled together with a plurality of couplings according to the first aspect of the invention.

Embodiments of the invention will now be described, by way of example only, with reference to the accompanying drawings, in which:
Figure 1 is a perspective view of a coupling according to an embodiment of the invention;
Figure 2 is a cross-section through the coupling illustrated in Figure 1;
Figure 3 is a perspective view of another coupling according to an embodiment of the invention;
Figure 4 is a cross-section through part of the sealing element used in the coupling of Figures 1 to 3; and
Figure 5 illustrates a ventilation ductwork element incorporating integral couplings according to another embodiment of the invention.

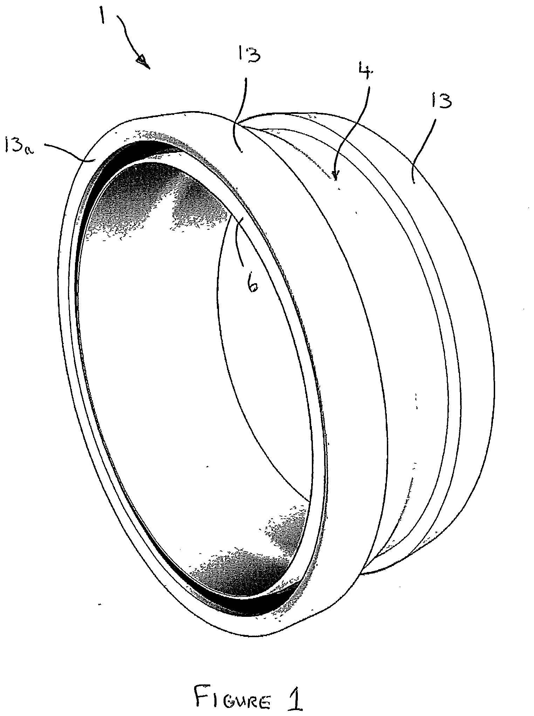

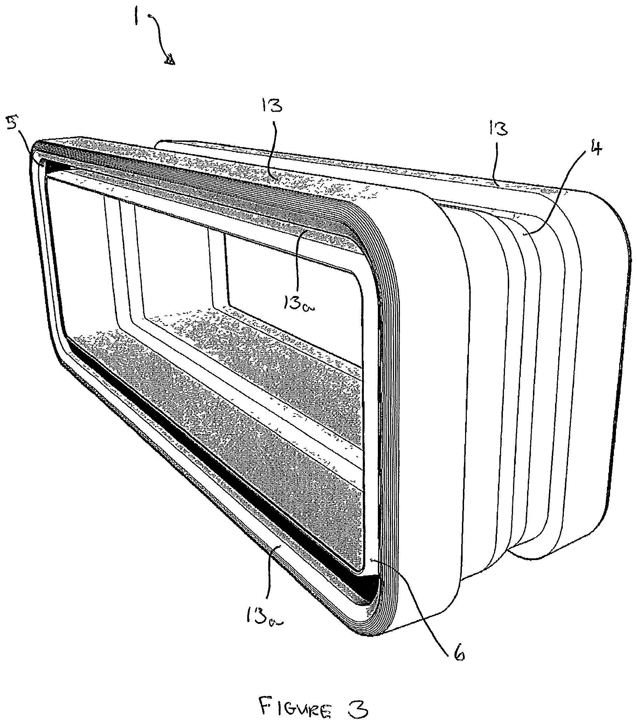

Referring now to the drawings, there is shown in Figure 1 a round pipe coupling 1 according to an embodiment of the invention which is used to couple a ventilation pipe (not shown) to a ventilation accessory (not shown) such as elbow bends, T-pieces and other adaptors, or to connect two lengths of round ventilation ducting together. A similar coupling 1, but rectangular in shape, used for connecting rectangular shaped ductwork or accessories is shown in Figure 3. It will be appreciated that the coupling and ductwork elements maybe of any complementary shape. The coupling 1 is made of injection moulded rigid plastics material of sufficient stiffness and durability such that the coupling is self-supporting.

The coupling 1 shown in Figure 1 is primarily used to connect a length of ventilation duct pipework having a first diameter to an accessory which is of reduced diameter. Consequently, the coupling 1 has a first socket 2 to receive an end of the duct pipework and, a second socket 3 at its other end which is of reduced diameter to match the diameter of the accessory to which the pipework is to be coupled. However, it will be appreciated that the coupling 1 can also be used to connect two identical runs of duct pipework together, in which case the sockets 2, 3 will be of equal size.

The coupling 1 has a body 4 having an outer wall 5 and an inner wall 6. Each end of the body 4 is open so as to form the socket 2,3 to receive a ductwork element or accessory to be connected to the coupling 1. The inner wall 6 is joined to the outer wall by a centrally positioned web 7 and extends from said web 7 in opposite directions so that each socket 2,3 includes a slot 8, 9 to receive the end of a ductwork element when inserted into the socket 2,3. The slot 8, 9 may be of a predetermined size so that the ductwork element will be a snug or relatively tight sliding fit therein so that the inner wall 6 helps to support the ductwork element within the socket 2, 3. Preferably, the free ends of the inner wall 4 have chamfered regions 6a to assist in guiding the ductwork element into the slot 8, 9.

It will be appreciated that the inner wall 6 provides strength and rigidity to the coupling and additional support to the ductwork element. As the shape of the end of the ductwork element may not be an exact match to the shape of the coupling into which it is to be pushed, the inner wall 6 guides and re-shapes the end of the ductwork element as it is inserted into the socket 2, 3 and pulls it into the correct shape so that it will properly seal against the sealing element 12. More specifically, if the coupling is round, the end of a ductwork element, such as a pipe, for insertion into the coupling may not be completely round. However, when the end of the pipe is inserted into the socket 2, 3 the inner wall 6 assists in pulling or deforming the end of the pipe back into a more perfectly round shape prior to contact with the sealing member 12 during further insertion into the socket 2, 3. The inner wall 6 also streamlines and provides the inner surface of the coupling with a more aerodynamic profile to minimise pressure loss that would occur if the coupling were to cause turbulence in the air flow.

Each socket 2, 3 comprises a rim 10 defined by a thinning of the outer wall 5 that forms a seat 11 to receive and mount a sealing element 12. A cap 13 fits over the end of each rim 10 and has a hooked portion 13a that extends radially inwardly over an end region of the sealing element 12 to retain the sealing element 12 in its seat 11. The cap 13 is preferably formed from a resiliently deformable material and is a snap fit over the rim 10 of the body 4 of the coupling 1. The cap 13 may be removable to facilitate the replacement of the sealing element 12.

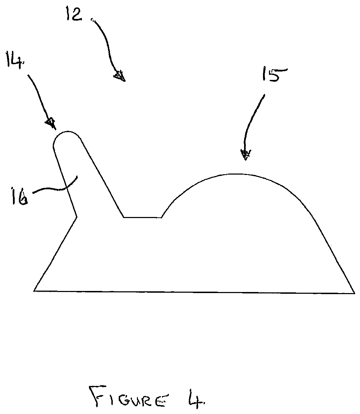

The sealing element 12 is illustrated in more detail in the cross-sectional view of Figure 4. The sealing member 12 is integrally moulded from a thermoplastic elastomer with dynamic performance and good compression set at operating temperatures. It comprises a primary sealing portion 14 and a secondary sealing portion 15. As shown in Figure 4, the secondary sealing portion 15 has a generally dome-shaped profile. The sealing member 12 is positioned so that the ductwork element will make initial contact with the surface of the dome as it is inserted into the socket 2, 3. This will cause the secondary sealing portion 15 to become resiliently compressed and biased into contact with the ductwork element. Although the secondary sealing portion 15 will make an effective seal with the ductwork element, the main seal is formed by the primary sealing portion 14 of the sealing member 12 and the secondary sealing portion 15 serves to support and guide the ductwork element as it is inserted into the socket 2,3 in the coupling 1.

The primary sealing portion 14 comprises a flap 16 of resilient material that extends upwardly at an angle into the slot 8, 9. As the end of the ductwork element is pushed into the socket 2, 3, it contacts the flap 16 and pushes and bends it downwardly so that the ductwork element can pass over it and fully home into the socket 2,3 until it reaches the connecting web 7. When the ductwork element is fully home, the flap 16 formed by the primary sealing portion 14 lies biased into engagement with the ductwork element thereby effecting a primary seal preventing the escape of air through the coupling. The flap 16 may be pushed down against the surface of the outer wall 5 by the ductwork element so that it is effectively squashed between the ductwork element and the outer wall 5, thereby enhancing the sealing effect provided by the primary sealing portion 14.

It will be noted that the coupling forms a self-seal or seals automatically as a direct result of pushing a ductwork element into the coupling without any additional steps and without any requirement to use any sealant or other materials.

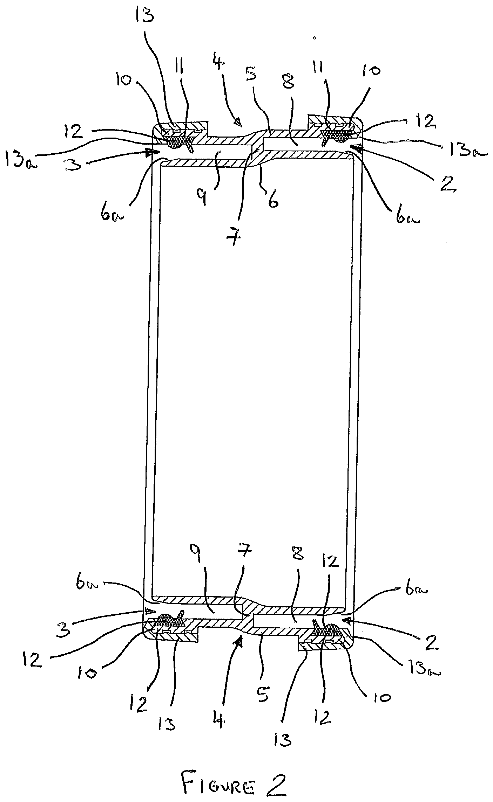

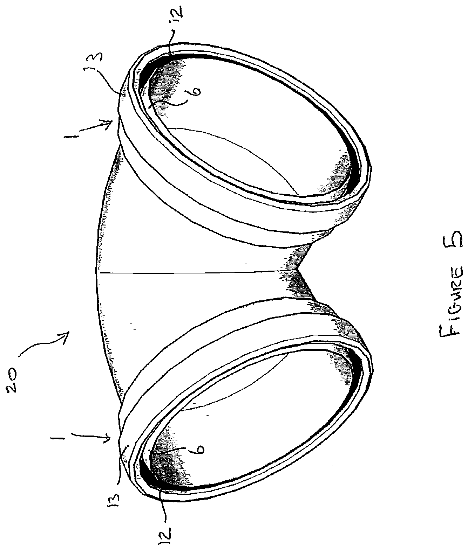

Although Figures 1 to 3 show a coupling for attaching two ductwork elements together, it will be appreciated that the coupling 1 could be integrally formed with a ductwork element so that two components may be connected together directly, without any intermediate coupling between them. A 90 degree pipe coupling accessory 20 is shown in Figure 5 which has been formed with a coupling 1 at each end that includes the inner wall 6 and the sealing member 12 as previously described. It will be appreciated that a ductwork element can include lengths of pipework, joints or T-pieces of any shape and includes any ventilation components that need to be connected together to form a ventilation system for carrying air around a premises.

The self-seal coupling of the invention is intended for plastic ventilation ducting in round ducts having an internal diameter of between 80 to 200mm. The wall thickness may range from 1.2mm to 2.0mm. However, it will be appreciated that the coupling of the invention is applicable to round ducts of any diameter and wall thickness. For rectangular ducts, it may be used for ducts of any size although is intended for use with ducts having the outer dimensions 110mm x 54mm, 150mm x 70mm, 180mm x 95mm, 204mm x 60mm and 220mm x 90mm, in addition to any other rectangular size in between and with wall thicknesses ranging from 1.2mm to 2.0mm.

It will be appreciated that the foregoing description is given by way of example only and that modifications may be made to the support assembly of the present invention without departing from the scope of the appended claims.

## Claims

1. A push-fit coupling for interconnecting ends of first and second ventilation ductwork elements together so that air flowing between said ventilation ductwork elements will pass through the coupling in a substantially airtight manner, the coupling (1) comprising an outer wall (5) defining first and second sockets (2,3) at opposite ends, each socket (2,3) being sized to slideably receive and support a respective end of a first and a second ductwork element therein, wherein each socket (2,3) includes a sealing member (12) against said outer wall (5) configured to resiliently deform and engage an end of a respective first and second ductwork element pushed into a socket (2,3) to form a substantially airtight seal between the coupling (1) and each ductwork element, **characterised in that** each sealing member (12) is integrally formed and comprises primary and secondary sealing portions (14,15), the primary sealing portion (14) comprising a flap (16) that is resiliently deformed or bent by the ductwork element during insertion of a ductwork element in the socket (2,3) beyond said secondary sealing portion (15) so that the flap (16) is biased into engagement with the ductwork element to form a primary seal between the socket (2,3) and the ductwork element, the secondary sealing portion (15) comprising a domed or triangular shaped element that forms a secondary seal between the socket (2,3) and the ductwork element and guides a ductwork element into the socket (2,3) and towards the primary sealing portion during insertion, the socket further comprising an inner wall that is spaced from and faces the sealing member to define a slot between the inner and outer walls to receive a ductwork element therein and which guides and re-shapes the end of a ductwork element during insertion so that it properly seals against the sealing element.

2. A coupling according to claim 1, wherein the socket comprises a seat to receive said sealing member, the coupling further comprising a retaining ring to locate the sealing member in said seat.

3. A coupling according to claim 2, wherein the retaining ring contacts said sealing member and is formed from a resilient material that forms a snap-fit over an end of the socket.

4. A coupling according to any preceding claim, wherein a free end of the inner wall has a chamfered edge to guide a ductwork element into the slot during insertion.

5. A ventilation ductwork system comprising a plurality of ventilation ductwork elements coupled together with a plurality of couplings according to any of claims 1 to 4.

## Patentansprüche

1. Steckkupplung zum Verbinden von Enden eines ersten und zweiten Lüftungskanalelements miteinander, so dass zwischen den genannten Lüftungskanalelementen strömende Luft auf eine im Wesentlichen luftundurchlässige Weise durch die Kupplung passiert, wobei die Kupplung (1) eine Außenwand (5) aufweist, die eine erste und eine zweite Aufnahme (2, 3) an gegenüberliegenden Enden definiert, wobei jede Aufnahme (2, 3) so bemessen ist, dass sie gleitend ein jeweiliges Ende eines ersten und zweiten Kanalelements darin aufnimmt und lagert, wobei jede Aufnahme (2, 3) ein Dichtungselement (12) an der genannten Außenwand (5) aufweist, so konfiguriert, dass es sich elastisch verformt und in ein Ende eines jeweiligen in eine Aufnahme (2, 3) gesteckten ersten und zweiten Kanalelements eingreift, um eine im Wesentlichen luftundurchlässige Dichtung zwischen der Kupplung (1) und jedem Kanalelement zu bilden, **dadurch gekennzeichnet, dass** jedes Dichtungselement (12) einstückig ausgebildet ist und primäre und sekundäre Dichtungsabschnitte (14, 15) aufweist, wobei der primäre Dichtungsabschnitt (14) eine Lasche (16) aufweist, die von dem Kanalelement beim Einführen eines Kanalelements in die Aufnahme (2, 3) über den genannten sekundären Dichtungsabschnitt (15) hinaus elastisch verformt oder gebogen wird, so dass die Lasche (16) in Eingriff mit dem Kanalelement vorgespannt wird, um eine primäre Dichtung zwischen der Aufnahme (2, 3) und dem Kanalelement zu bilden, wobei der sekundäre Dichtungsabschnitt (15) ein gewölbtes oder dreieckiges Element umfasst, das eine sekundäre Dichtung zwischen der Aufnahme (2, 3) und dem Kanalelement bildet und ein Kanalelement in die Aufnahme (2, 3) und in Richtung des primären Dichtungsabschnitts beim Einführen führt, wobei die Aufnahme ferner eine Innenwand umfasst, die von dem Dichtungselement beabstandet und ihm zugewandt ist, um einen Schlitz zwischen der Innen- und Außenwand zum Aufnehmen eines Kanalelements darin zu definieren, und die das Ende eines Kanalelements beim Einführen führt und umformt, so dass es richtig gegen das Dichtungselement abdichtet.

2. Kupplung nach Anspruch 1, wobei die Aufnahme einen Sitz zum Aufnehmen des genannten Dichtungselements umfasst, wobei die Kupplung ferner einen Haltering zum Positionieren des Dichtungselements in dem genannten Sitz umfasst.

3. Kupplung nach Anspruch 2, wobei der Haltering das genannte Dichtungselement kontaktiert und aus einem elastischen Material gebildet ist, das einen Schnappverschluss über einem Ende der Aufnahme bildet.

4. Kupplung nach einem vorherigen Anspruch, wobei ein freies Ende der Innenwand einen abgeschrägten Rand zum Führen eines Kanalelements in den Schlitz beim Einführen hat.

5. Ventilationskanalsystem, das mehrere Ventilationskanalelemente umfasst, die mit mehreren Kupplungen nach einem der Ansprüche 1 bis 4 miteinander gekoppelt sind.

## Revendications

1. Raccord à ajustement gras pour interconnecter ensemble les extrémités d'un premier et d'un deuxième élément de conduite de ventilation de manière à ce que l'air s'écoulant entre lesdits éléments de conduite de ventilation passe à travers le raccord d'une manière essentiellement étanche à l'air, ce raccord (1) comportant une paroi extérieure (5) définissant une première et une deuxième douille (2, 3) à des extrémités opposées, chaque douille (2, 3) étant dimensionnée de façon à recevoir de manière coulissante et à supporter une extrémité respective d'un premier et d'un deuxième élément de conduite à l'intérieur, chaque douille (2, 3) comprenant un élément d'étanchéité (12) contre ladite paroi extérieure (5) configuré de façon à se déformer de manière élastique et à s'engager avec une extrémité d'un premier et d'un deuxième élément de conduite respectif poussé dans une douille (2, 3) afin de former un joint essentiellement étanche à l'air entre le raccord (1) et chaque élément de conduite, **caractérisé en ce que** chaque élément d'étanchéité (12) est formé d'une seule pièce et comporte des parties d'étanchéité primaire et secondaire (14, 15), la partie d'étanchéité primaire (14) comportant une patte (16) qui est déformée élastiquement ou pliée par l'élément de conduite pendant l'insertion d'un élément de conduite dans la douille (2, 3) au-delà de ladite partie d'étanchéité secondaire (15) de manière à ce que la patte (16) soit sollicitée à s'engager avec l'élément de conduite afin de former un joint d'étanchéité primaire entre la douille (2, 3) et l'élément de conduite, la partie d'étanchéité secondaire (15) consistant en un élément à forme en dôme ou triangulaire qui forme un joint d'étanchéité secondaire entre la douille (2, 3) et l'élément de conduite et qui guide un élément de conduite dans la douille (2, 3) et vers la partie d'étanchéité primaire pendant l'insertion, la douille comportant en outre une paroi intérieure qui est écartée de l'élément d'étanchéité et qui lui fait face afin de définir une fente entre les parois intérieure et extérieure de façon à recevoir un élément de conduite à l'intérieur et qui guide et reforme l'extrémité d'un élément de conduite pendant l'insertion de manière à ce qu'il forme un joint bien étanche contre l'élément d'étanchéité.

2. Raccord selon la revendication 1, dans lequel la douille comporte un siège pour recevoir ledit élément d'étanchéité, ce raccord comportant en outre une bague de retenue pour positionner ledit élément d'étanchéité dans ledit siège.

3. Raccord selon la revendication 2, dans lequel la bague de retenue entre en contact avec ledit élément d'étanchéité et est formée à partir d'un matériau élastique qui s'emboîte par pression au-dessus d'une extrémité de la douille.

4. Raccord selon l'une quelconque des revendications précédentes, dans lequel une extrémité libre de la paroi intérieure a un bord chanfreiné pour guider un élément de conduite dans la fente pendant l'insertion.

5. Système de conduite de ventilation comportant une pluralité d'éléments de conduite de ventilation raccordés ensemble avec une pluralité de raccords selon l'une quelconque des revendications 1 à 4.
